# FASCICULE DE BREVET EUROPEEN

(11) **EP 0 537 265 B1**
(45) Date de publication et mention de la délivrance du brevet: **19.03.1997**
(21) Numéro de dépôt: 91913024.5
(22) Date de dépôt: 03.07.1991
(51) Int. Cl.: A01B 3/40, A01B 15/08

(54) **CORPS DE CHARRUE POUR CHARRUE A CORPS SYMETRIQUE**
SYMMETRISCHE PFLUGSCHAR
PLOUGH BODY FOR A PLOUGH HAVING A SYMMETRICAL BODY

(30) Priorité: 05.07.1990 FR 9008537
(43) Date de publication de la demande: 21.04.1993
(73) Titulaire: COSTE, Denis, F-93270 Sevran (FR)
(72) Inventeur: COSTE, Denis, F-93270 Sevran (FR)
(86) Numéro de dépôt international: FR9100540
(87) Numéro de publication internationale: WO9200661

(56) Documents cités:
- WO-A-88/01129
- FR-A- 2 390 079
- FR-A- 2 440 140
- FR-A- 2 604 850
- US-A- 4 800 963

## Description

La présente invention concerne un corps symétrique destiné à équiper une charrue munie d'un jeu de corps unique apte à labourer dans une première direction géographique lorsque la poutre supportant la série de corps occupe une première position latérale, et apte à labourer la terre dans une deuxième direction géographique lorsque ladite poutre occupe la position latérale opposée. Le corps est constitué par un versoir prolongé a sa partie inférieure par un soc formant un angle d'entrure compris entre 10 et 30°. Le versoir forme un angle d'attaque moyen compris entre 30 et 45°. Le corps est essentiellement concave.

Il est connu de l'art antérieur le brevet français n° 86/11621 et le PCT correspondant WO-A-88 /01129 décrivant un versoir symétrique de forme partiellement concave avec des génératrices dont la concavité horizontale décroît de haut en bas et, montrant une courbe horizontale apparaissant comme une portion de circonférence qui donnent un labour, dans certaines terres particulièrement argileuses, trop chaotique et l'enfouissement de la végétation reste insuffisant, dû à ce que le versoir a une concavité sur toute sa hauteur et une forme régulière.

L'objet de la présente invention est de remédier a cet inconvénient en proposant selon une première caractéristique un corps symétrique destiné à équiper une charrue munie d'un jeu de corps unique, apte à labourer dans une première direction géographique lorsque la poutre supportant la série de corps occupe une première position latérale, et apte a labourer la terre dans une deuxième direction géographique lorsque ladite poutre occupe la position latérale opposée, ledit corps constitué d'un versoir (1), formé de trois parties : une centrale (3) et deux latérales droite et gauche (4) et (5), présentant un angle d'entrure (E) compris entre 10 et 30° que fait dans un plan vertical perpendiculaire à l'arête du soc ce dernier avec le sol et un angle d'attaque moyen compris entre 30 et 45° que fait horizontalement la jonction soc-versoir avec la direction opposée à l'avancement, le dit versoir étant de forme concave variable et constitué de génératrices juxtaposées (6) chacune en forme de virgule, située dans un plan vertical caractérisé en ce que :
- la partie centrale (3), dont la projection sur un plan est voisine de la forme d'un trapèze, a sa grande base qui est la jonction (10) du versoir avec le soc (2) et a ses génératrices juxtaposée (6) qui reposent pour leurs extrémités inférieures sur la droite (10) et pour leurs extrémités supérieures sur une courbe,
- les extrémités latérales (4) et (5) prolongement de la partie centrale sont engendrées par la rotation d'une génératrice (25) parcourant à sa partie supérieure (22) - (23) un chemin correspondant à une portion d'ellipse,
- chacune des génératrices (6), constituant le versoir, a sa corde (7) la sous-tendant qui fait avec la tangente considérée, en tous les points le long de ladite génératrice, un angle variant depuis une valeur B dans l'extrémité inférieure du versoir jusqu'à une valeur négative supérieure en valeur absolue à l'extrémité supérieure (8) en passant par une valeur nulle, ladite variation étant différente entre une génératrice et une autre,
- la distance entre la corde (7) et le point tangent à la génératrice (6) où ladite valeur de B est nulle étant maximum avec la génératrice située dans le plan vertical de symétrie du versoir,
- l'ensemble des points du versoir, où la tangente à chaque génératrice située dans un plan vertical fait un angle de valeur nulle avec une corde correspondant étant une ligne courbe dont les différentes portions sont situées à des hauteurs différentes sur le versoir afin d'obtenir, de part et d'autre du plan vertical de symétrie, avec un seul versoir, une surfaces droite et une surface gauche, chacune asymétrique de concavité variable dans les deux directions horizontale et verticale dudit plan vertical de symétrie à chacune des extrémités latérales, pour donner dans chaque sens de labour un sillon de forme continue non chaotique.

Selon une deuxième caractéristique la dite concavité variable est constituée horizontalement suivant trois parties successives: la première partie (45), inférieure et correspondant au premier cinquième de la hauteur du corps, près de la jonction (10) soc-versoir, étant sensiblement plate, la deuxième partie médiane correspondant sensiblement aux trois cinquièmes suivants étant dans sa partie centrale (3) concave, légèrement verticalement (47) et très légèrement horizontalement (48), allant en s'annulant vers le centre, avec un début d'accentuation vers le haut (49) de cette partie et vers les parties latérales (4) et (5), où dans ces dernières, en leur début jouxtant la partie centrale (3), elle est concave, faiblement horizontalement (50) et légèrement verticalement (51), allant en s'annulant vers le bas (46) et en s'accentuant vers le haut (51), pour devenir décroissante et s'annuler vers les bords latéraux,
la troisième partie supérieure, correspondant sensiblement au dernier cinquième, étant d'une concavité, dans la partie centrale (3) accentuée verticalement (52) et légèrement horizontalement (53), et dans les parties latérales la jouxtant accentuée verticalement et horizontalement (54) pour devenir sensiblement nulle à leur extrémité.

Selon une troisième caractéristique l'ensemble des points de valeur nulle, où la tangente à chaque génératrice verticale fait un angle nul avec la corde correspondante, des parties latérales est situé plus haut sur le versoir que l'ensemble des points de même valeur nulle de la partie centrale du versoir, les dits points représentant, de part et d'autre du plan vertical de symétrie AA', un chemin ayant la forme d'une corne de boeuf, aux extrémités latérales plus ou moins droites relevées ou retombantes selon la forme variable donnée aux extrémités (28) et (29) des parties latérales (4) et (5) et constituée de trois portions raccordées entre elles correspondant chacune sensiblement à une partie d'ellipse, l'une centrale 58 dont le point inférieur (57), de valeur nulle, est situé, pour des conditions moyennes de labour, sensiblement à mi-hauteur du versoir dans le plan de symétrie vertical AA', les deux autres (59) une à chaque extrémité latérale de la précédente (58) se dirigeant vers les extrémités latérales (4) et (5).

Dans ce qui précède, la position de la ligne d'annulation de l'angle de la tangente est indiquée de façon approximative. Il est bien entendu que l'on ne sortira pas du cadre de la présente invention en retenant pour la corne de boeuf une position et une forme selon les types de terres et les profondeurs de labour différentes à celle indiquée de façon à rendre plus compréhensible la description. Par contre, il est essentiel que cette ligne soit disposée de façon telle que sa partie centrale (58) soit disposée plus bas que ses deux parties latérales (59). L'intérêt de cette forme bien particulière du versoir est le suivant : la partie centrale inférieure de concavité plus ou moins nulle et médiane de concavité faible permet d'améliorer le glissement de la bande centrale de labour vers l'arrière sans provoquer de mouvement circulaire tendant à rejeter la terre labourée trop loin latéralement, ce qui serait à l'origine d'un labour chaotique comme cela ce fait avec un versoir ayant un angle d'attaque trop important. En outre, la forme des parties latérales permet à la terre, suivant le sens d'utilisation du corps symétrique, pour la partie inférieure, de s'évacuer rapidement vers l'arrière, en formant l'embase du sillon, la plus large possible, pour éviter à la partie supérieure de s'ébouler derrière le versoir. La partie latérale extérieure permet grâce à la concavité accentuée de la partie supérieure du versoir d'évacuer la bande extérieure à labourer sur la partie supérieure du versoir en la retournant régulièrement sans laisser apparaître de végétation pour s'adosser aussi au précédent sillon d'une manière continue avec une forme arrondie lorsque la concavité de la partie extrême latérale est maximum et en forme de crête lorsque la partie latérale extérieure devient plus ou moins plate. Il en découle une excellente qualité du labour allongé et non chaotique d'autant plus que la compacité du sol est importante, comparable à celui obtenu avec des charrues à corps conventionnels, bien que le poids et la complexité mécanique de la charrue soient considérablement améliorés.

Ainsi la forme et la position particulières de la concavité telle que déterminée par le chemin en corne de boeuf, permettent d'effectuer des labours à droite D et à gauche G par les deux sens d'écoulement adaptés sur un même versoir, à la manière des versoirs dissymétriques droit et gauche.

Selon un mode de réalisation préféré, les parties latérales présentent un coin supérieur de moindre concavité. Ce mode de réalisation permet de réaliser un adossement des sillons en forme de crête. Il en résulte un labour plus aéré améliorant la pénétration de l'eau et évitant le phénomène de battance à l'origine de l'asphyxie des sols.

Ce choix particulier de concavité variable permettent de diminuer la longueur du versoir, de le rendre symétrique et par conséquent, de réduire le prix et le poids de la charrue ainsi équipée, et accessoirement de permettre le choix d'un engin tracteur de moindre puissance. En outre, le nombre de pièces d'usure est réduit, d'où une amélioration notable de la fiabilité, de la durée de vie et une amélioration sensible du coût d'entretien de telles charrues.

La présente invention sera mieux comprise à la lecture de la description qui va suivre, concernant un mode de réalisation particulier non limitatif de la présente invention et s'appuyant sur les dessins où :
- La figure 1 représente une vue de face projetée sur un plan vertical du corps selon l'invention, montrant la position des zones de concavités différentes et la valeur de ces concavités les unes par rapport aux autres dans l'ordre progressif suivant: nul plus ou moins, faible très légérement, légérement, accentuée.
- La figure 2 représente une vue en coupe médiane suivant A-A' du corps selon l'invention.

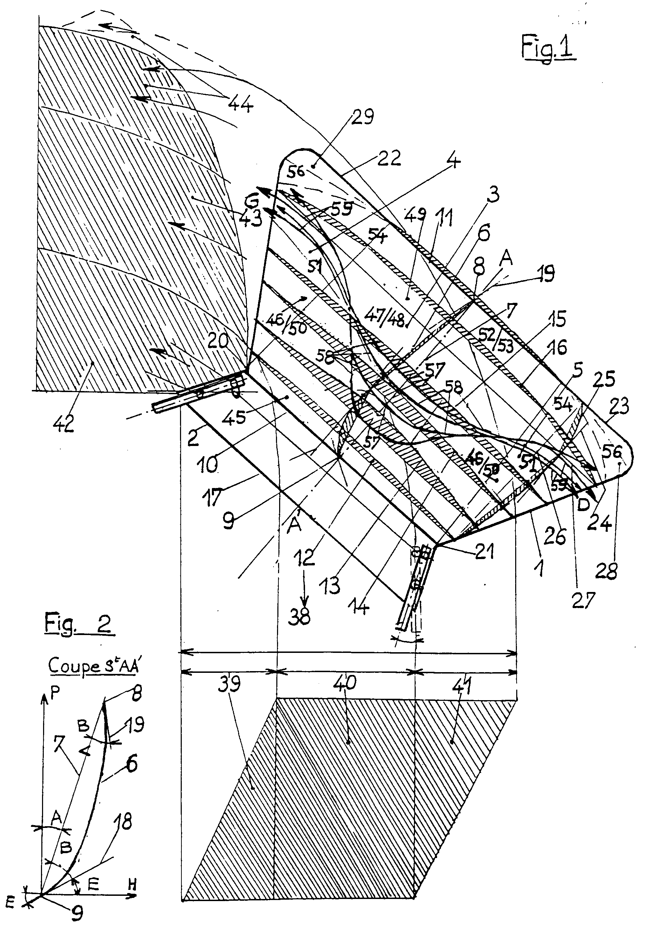

Le corps représenté en figure 1 est constitué par un versoir (1) prolongé à sa partie inférieure par un soc (2). Le versoir (1) présente une partie centrale (3) prolongée latéralement par deux parties latérales (4,5). Le versoir (1) ainsi que le soc (2) sont symétriques par rapport à un plan médian A-A'. La partie centrale (3) est globalement concave.

Cette concavité variable sera définie de façon plus détaillée d'une part, suivant des plans de coupe verticaux, et d'autre part, suivant des plans de coupe horizontaux.

Si l'on considère des plans de coupe verticaux, on peut considérer que la partie centrale est engendrée par des génératrices transversales, c'est-à-dire orientées de haut en bas. Sur la figure 1, seule la génératrice médiane (6) a été représentée. Pour définir la forme particulière des génératrices, on considèrera également la corde (7) reliant l'extrémité supérieure (8) de la génératrices (6) à l'extrémité inférieure (9) de ladite génératrice, l'extrémité supérieure (8) correspond au bord supérieur du versoir,' l'extrémité inférieure (9) correspondant à la bande de liaison du versoir (1) avec le soc (2). Lorsque l'on considère l'ensemble des cordes (7), on définit une surface trapézoïdale dont la grande base est de longueur sensiblement égale à la longueur de la ligne de liaison (10) du versoir (1) avec le soc (2). Cette surface trapézoïdale correspond à une portion tronconique de très grand rayon de courbure. En effet, le bord supérieur (11) du versoir n'est pas totalement droit, mais peut être sensiblement incurvé, alors que la bande inférieure est sensiblement plane vers sa jonction avec le soc où elle devient droite. Différentes sections (12) à (16) suivant des plans horizontaux montrent la variation de la concavité. La concavité verticale est maximale suivant un plan de symétrie A-A' disposé sensiblement à mi-hauteur du versoir (1). A ce niveau, la tangente (17) à la génératrice (6) présente l'écart maximum avec la corde (7). Par ailleurs, cette tangente (17) forme à cet endroit un angle nul avec la corde (7). Cet écart entre la tangente (17) et la corde (7) est maximum pour la génératrice centrale (6) et diminue faiblement mais régulièrement pour les génératrices latérales verticales lorsqu'on s'éloigne du plan médian.

Comme représenté en figure 2, la tangente (18) à l'extrémité inférieur (9) de la génératrice (6) forme avec la corde (7) un angle B. En outre, la corde (7) forme avec un plan vertical P un angle A correspondant à l'inclinaison du corps. la génératrice (18) forme avec le plan horizontal H un angle ê sensiblement égal à l'angle que fait le soc à sa jonction avec le versoir avec l'horizontale. La tangente (19) à l'extrémité supérieure (8) de la génératrice (6) forme avec la corde (7) un angle légèrement supérieur à l'angle B précedemment défini. L'angle que forme la tangente à la génératrice avec la corde (7) dans le plan central de symétrie varie ainsi de bas en haut de puis une valeur B, s'annule sensiblement au dessus à mi-hauteur et augmente à nouveau en valeur absolue, mais en sens contraire, pour atteindre une valeur supérieure à B.

Le versoir représenté en figure 1 comprend en outre deux parties latérales (4,5) de forme sensiblement conique. Ces parties latérales (4,5) sont engendrées par des génératrices convergeant en leur extrémité inférieure vers le point (20,21) et appuyant leur extrémité supérieure sur un chemin de forme sensiblement elliptique correspondant au bord supérieur (22,23) du corps. Bien entendu, le point d'inversion des tangentes aux génératrices varie de façon continue d'une extrémité latérale (4) à l'autre extrémité latérale (5) en passant par la partie centrale (3) en suivant un chemin encorne de boeuf correspondant sensiblement à trois portion d'ellipse. Les parties latérales (4,5) présentent un coin supérieur (28,29) de concavité différente, voire plus ou moins nulle.

Le fonctionnement dur corps symétrique selon la présente invention est le suivant:
- le corps est tracté dans la direction d'avancement indiquée par la flèche (38). La zone labourée présente trois zones: une bande intérieure (39), une bande médiane (40) et une bande extérieure (41). La bande intérieure est attaquée par l'extrémité intérieure du soc et la partie inférieure du versoir (1), la terre ainsi soulevée constituant l'embase (42) du sillon. La partie médiane (40), qui est la plus important en largeur, et donc en volume, est attaquée par la plus grande partie du soc (2 ainsi que par la partie centrale du versoir (1). la terre provenant de cette bande médiane (40) est plus ou moins retournée et dirigée sur l'embase (42) du sillon pour former la partie médiane (43) du sillon. La bande extérieure (41) est attaquée par la partie latérale extérieure (5) du corps (1) et est retournée pour former la crête (44) du sillon.

La présente invention n'est en aucune façon limitée aux modes de réalisation et exemples décrits dans ce qui précède. Bien au contraire, l'homme du métier sera à même de réaliser de nombreuses variantes d'exécution sans pour autant sortir du cadre de la protection conférée par la présente demande, lequel cadre a pour objet la variation particulière suivant deux directions de la concavité du versoir symétrique concave dans sa forme générale afin de réaliser dans les deux sens de labour un labour non chaotique avec des sillons qui présentent linéairement une continuité comme effectuée par les corps symétriques de l'art antérieur.

## Revendications

1. Corps symétrique destiné à équiper une charrue munie d'un jeu de corps unique, apte à labourer dans une première direction géographique lorsque la poutre supportant la série de corps occupe une première position latérale, et apte à labourer la terre dans une deuxième direction géographique lorsque ladite poutre occupe la position latérale opposée, ledit corps constitué d'un versoir (1), formé de trois parties : une centrale (3) et deux latérales droite et gauche (4) et (5), présentant un angle d'entrure (E) compris entre 10 et 30° que fait dans un plan vertical perpendiculaire à l'arête du soc ce dernier avec le sol et un angle d'attaque moyen compris entre 30 et 45° que fait horizontalement la jonction soc-versoir avec la direction opposée à l'avancement, le dit versoir étant de forme concave variable et constitué de génératrices juxtaposées (6) chacune en forme de virgule, située dans un plan vertical caractérisé en ce que :
- la partie centrale (3), dont la projection sur un plan est voisine de la forme d'un trapèze, a sa grande base qui est la jonction (10) du versoir avec le soc (2) et a ses génératrices Juxtaposées (6) qui reposent pour leurs extrémités inférieures sur la droite (10) et pour leurs extrémités supérieures sur une courbe,
- les extrémités latérales (4) et (5) prolongement de la partie centrale sont engendrées par la rotation d'une génératrice (25) parcourant à sa partie supérieure (22) - (23) un chemin correspondant à une portion d'ellipse,
- chacune des génératrices (6), constituant le versoir, a sa corde (7) la sous-tendant qui fait avec la tangente considérée, en tous les points le long de ladite génératrice, un angle variant depuis une valeur B dans l'extrémité inférieure du versoir jusqu'à une valeur négative supérieure en valeur absolue à l'extrémité supérieure (8) en passant par une valeur nulle, ladite variation étant différente entre une génératrice et une autre,
- la distance entre la corde (7) et le point tangent à la génératrice (6) où ladite valeur de B est nulle étant maximum avec la génératrice située dans le plan vertical de symétrie du versoir,
- l'ensemble des points du versoir, où la tagente à chaque génératrice située dans un plan vertical fait un angle de valeur nulle avec une corde correspondant étant une ligne courbe dont les différentes portions sont situées à des hauteurs différentes sur le versoir afin d'obtenir, de part et d'autre du plan vertical de symétrie, avec un seul versoir, une surfaces droite et une surface gauche, chacune asymétrique de concavité variable dans les deux directions horizontale et verticale, du dit plan vertical de symétrie à chacune des extrémités latérales, pour donner dans chaque sens de labour un sillon de forme continue non chaotique.

2. corps symétrique selon la revendications 1 caractérisé en ce que la concavité variable est constituée horizontalement suivant trois parties successives:
la première partie (45), inférieure et correspondant au premier cinquième de la hauteur du corps, près de la jonction (10) soc-versoir, étant sensiblement plate,
la deuxième partie médiane correspondant sensiblement aux trois cinquièmes suivants étant dans sa partie centrale (3) concave, légèrement verticalement (47) et très légèrement horizontalement (48), allant en s'annulant vers le centre, avec un début d'accentuation vers le haut (49) de cette partie et vers les parties latérales (4) et (5), où dans ces dernières, en leur début jouxtant la partie centrale (3), elle est concave, faiblement horizontalement (50) et légèrement verticalement (51), allant en s'annulant vers le bas (46) et en s'accentuant vers le haut (51), pour devenir décroissante et s'annuler vers les bords latéraux,
la troisième partie supérieure, correspondant sensiblement au dernier cinquième, étant d'une concavité, dans la partie centrale (3) accentuée verticalement (52) et légèrement horizontalement (53), et dans les parties latérales la jouxtant accentuée verticalement et horizontalement (54) pour devenir sensiblement nulle à leur extrémité.

3. corps symétrique selon l'une des revendications 1 et 2 caractérisé en ce que l'ensemble des points de valeur nulle, où la tangente à chaque génératrice verticale fait un angle nul avec la corde correspondante, des parties latérales est situé plus haut sur le versoir que l'ensemble des points de même valeur nulle de la partie centrale du versoir,
les dits points représentant, de part et d'autre du plan vertical de symétrie AA', un chemin ayant la forme d'une corne de boeuf, aux extrémités latérales plus ou moins droites relevées ou retombantes, selon la forme variable donnée aux extrémités (28) et (29) des parties latérales (4) et (5) et constituée de trois portions raccordées entre elles correspondant chacune sensiblement à une partie d'ellipse, l'une centrale (58) dont le point inférieur (57) de valeur nulle est situé, pour des conditions moyennes de labour, sensiblement à mi-hauteur du versoir dans le plan de symétrie vertical AA', les deux autres (59) une à chaque extrémité latérale de la précédente 58 se dirigeant vers les extrémités latérales (4) et (5).

## Claims

1. Symmetrical body designed to equip a plough provided with a single set of bodies capable of ploughing the ground in a first geographical direction when the beam supporting the series of bodies occupies a first lateral position and capable of ploughing in a second geographical direction when the said beam occupies the opposite lateral position, the said body being formed by a mould board (1) consisting of three parts: a central part (3) and a right and a left lateral part (4) and (5), having an angle of entry (E) of between 10 and 30°, which, in a vertical plane perpendicular to the edge of the ploughshare, this latter makes with the ground, and a mean angle of attack of between 30 and 45°, which the junction between the ploughshare and the mould board makes with the direction opposite to the feed movement, the shape of the said mould board being of variable concavity and consisting of juxtaposed generatrices, each of the shape of a comma and situated in a vertical plane, characterized by the fact that:
- the central part (3), of which the projection on a plane is approximately trapezoidal in shape, has its major base, which is the junction (10) of the mould board to the ploughshare (2), and its juxtaposed generatrices (6), of which the lower ends rest on the straight line (10) and of which the the upper ends rest on a curve,
- the lateral ends (4) and (5), a prolongation of the central part, are produced by the rotation of a generatrix (25) of which the upper part (22)-(23) follows a traject corresponding to a portion of an ellipse,
- each of the generatrices (6) forming the mould board is subtended by its chord (7), which forms, with the tangent in question, at all points along the said generatrix, an angle varying between a value B at the lower end of mould board to a negative value of a higher absolute value at the upper end (8), passing through a zero value, the said variation differing as between one generatrix and another,
- the distance between the chord (7) and the point tangent to the generatrix (6) where the said value of B is zero being maximum with the generatrix situated in the vertical plane of symmetry of the mould board,
- the series of points on the mould board where the tangent to each generatrix situated in a vertical plane forms a zero angle with a corresponding chord being a curved line of which the different portions are situated at different levels on the mould board, in in order to obtain, on the respective two sides of the vertical plane of symmetry, with one and the same mould board, a right-hand surface and a left-hand surface, each of which is asymmetrical and of variable concavity in the horizontal and vertical directions of the said vertical plane of symmetry at each of the lateral ends, in order to produce a continuous and even furrow in each ploughing direction.

2. Symmetrical body according to Claim 1, characterized by the fact that the variable concavity is provided horizontally in accordance with three successive parts:
The first part (45), being the bottom part and corresponding to the first fifth of the height of the body, near the junction (10) between the ploughshare and the mould board, this part being largely flat.
The second part, being the middle part, largely corresponding to the subsequent three fifths, its central portion (3) being concave, slightly in the vertical direction (47) and very slightly in the horizontal direction (48), decreasing to nil towards the centre, with initial accentuation towards the top (49) of this part and towards the lateral portions (4) and (5), in which latter, at their commencement adjacent to the central part (3), it is concave, slightly in the horizontal direction (50) and slightly in the vertical direction (51), decreasing to nil towards the bottom (46) and becoming accentuated towards the top (51), decreasing and becoming nil towards the lateral edges.
The third part, being the top part, largely corresponding to the last fifth, having concavity (9) accentuated vertically (52) in the central portion and slightly in the horizontal direction (53), while in the lateral portions adjacent thereto they are accentuated vertically and horizontally (54), decreasing almost to zero at their extremity.

3. Symmetrical body according to either of Claims 1 and 2, characterized by the fact that the totality of the points with a value of zero, where the tangent to each vertical generatrix forms a zero angle with the corresponding chord of the lateral portions is situated higher up on the mould board than the totality of the points of the same zero value of the central part of the mould board, the said points representing, on each side of the vertical plane of symmetry AA¹, a traject of the shape of a bull's horn, with more or less straight lateral ends, raised or falling back, in accordance with the variable shape given to the ends (28) and (29) of the lateral portions (4) and (5) and consisting of three interconnected portions each largely corresponding to an elliptical part, one portion being the central portion (58), of which the lower point (57) with a value of zero is situated, for average ploughing conditions, approximately half way up the mould board in the vertical plane of symmetry AA¹, while the other two (59), one at each lateral extremity of the preceding portion (58), are directed towards the lateral extremities (4) and (5).

## Patentansprüche

1. Symmetrischer Körper, dazu bestimmt, einen Pflug zu bestücken, der mit einem Satz einzelner Körper ausgestattet ist, dazu fähig, in einer ersten geographischen Richtung zu pflügen, wenn der Balken, welcher die Reihe von Körpern trägt, eine erste seitliche Position einnimmt, und dazu fähig, in einer zweiten geographischen Richtung zu pflügen, wenn der Balken die entgegengesetzte seitliche Position einnimmt, wobei dieser Körper von einem Streichblech (1) gebildet wird, das aus drei Teilen besteht: einem zentralen (3) und zwei seitlichen, einem rechten und einem linken (4) und (5), mit einem Eindringwinkel (E) zwischen 10 und 30°, den in einer vertikalen Ebene senkrecht zur Kante der Schar diese letztere mit dem Boden bildet, und mit einem mittleren Angriffswinkel zwischen 30 und 45°, den die Verbindung Schar-Streichblech mit der der Vorwärtsbewegung entgegengesetzten Richtung bildet, wobei das Streichblech von veränderlicher konkaver Form ist und von jeweils kommaförmigen, nebeneinanderliegenden Erzeugenden (6) gebildet wird, die in einer vertikalen Ebene liegen, dadurch gekennzeichnet, daß:
- der zentrale Teil (3), dessen Projektion auf eine Ebene der Form eines Trapezes ähnlich ist, dessen große Basis durch die Verbindung (10) des Streichblechs mit der Schar (2) gebildet ist, und nebeneinanderliegende Erzeugende besitzt, die mit ihren unteren Enden auf der Geraden (10) und mit ihren oberen Enden auf einer Kurve ruhen,
- die seitlichen Ränder (4) und (5), die eine Verlängerung des zentralen Teils bilden, durch die Drehung einer Erzeugenden (25) erzeugt werden, die an ihrem oberen Teil (22) - (23) eine Bahn durchläuft, welche einem Teil einer Ellipse entspricht,
- jede der das Streichblech bildenden Erzeugenden (6) eine sie unterspannende Sehne (7) aufweist, die an allen Punkten entlang dieser Erzeugenden mit der jeweiligen Tangente einen Winkel bildet, der sich von einem Wert B am unteren Ende des Streichblechs bis zu einem im Absolutwert höheren, negativen Wert am oberen Ende (8) ändert, indem er den Wert Null durchläuft, wobei diese Veränderung zwischen einer Erzeugenden und einer anderen unterschiedlich ist,
- wobei der Abstand zwischen der Sehne (7) und dem die Erzeugende (6) tangierenden Punkt, an dem der Wert von B Null ist, bei der Erzeugenden, die in der vertikalen Symmetrieebene des Streichblechs liegt, maximal ist,
- wobei die Gesamtheit der Punkte des Streichblechs, an denen die Tangente an jeder in einer vertikalen Ebene gelegenen Erzeugenden einen Winkel mit dem Wert Null mit einer entsprechenden Sehne bildet, eine gekrümmte Linie ist, deren verschiedene Abschnitte sich in verschiedenen Höhen auf dem Streichblech befinden, um auf beiden Seiten der vertikalen Symmetrieebene mit einem einzigen Streichblech eine rechte und eine linke Fläche zu erhalten, die jeweils von der vertikalen Symmetrieebene bis zu jedem der Seitenränder in den beiden Richtungen, der horizontalen und der vertikalen, asymmetrisch von veränderlicher Konkavität sind, um in jeder Pflügrichtung eine Furche von kontinuierlicher, geordneter Form zu liefern.

2. Symmetrischer Körper nach Anspruch 1, dadurch gekennzeichnet, daß die veränderliche Konkavität horizontal entlang drei aufeinanderfolgender Teilen gebildet wird:
dem ersten, unteren Teil (45) nahe der Verbindung (10) Schar-Streichblech, der dem ersten Fünftel der Höhe des Körpers entspricht und im wesentlichen flach ist,
dem zweiten, mittleren Teil, der im wesentlichen drei folgenden Fünfteln entspricht und in seinem zentralen Teil (3) vertikal leicht (47) und horizontal sehr leicht (48) konkav ist, zum Zentrum hin schwindend, mit beginnender Verstärkung zum oberen Bereich (49) dieses Teils und zu den seitlichen Teilen (4) und (5) hin, wo er in diesen letzteren an ihrem an den zentralen Teil (3) angrenzenden Anfang horizontal schwach (50) und vertikal leicht (51) konkav ist, nach unten hin (46) schwindend und nach oben hin (51) stärker werdend, um zu den seitlichen Rändern hin abzunehmen und zu schwinden,
dem dritten, oberen Teil, der im wesentlichen dem letzten Fünftel entspricht und eine in dem zentralen Teil (3) vertikal verstärkte (52) und horizontal leichte (53) Konkavität aufweist und in den seitlichen, an diesen angrenzenden Teilen eine vertikal und horizontal (54) verstärkte Konkavität aufweist, die an ihrem Rand im wesentlichen gleich Null wird.

3. Symmetrischer Körper nach einem der Ansprüche 1 und 2, dadurch gekennzeichnet, daß sich die Gesamtheit der Punkte der seitlichen Teile mit dem Wert Null, an denen die Tangente an jeder vertikalen Erzeugenden einen Winkel Null mit der entsprechenden Sehne bildet, höher auf dem Streichblech befindet als die Gesamtheit der Punkte mit demselben Wert Null des zentralen Teils des Streichblechs,
wobei diese Punkte auf beiden Seiten der vertikalen Symmetrieebene AA' eine stierhornförmige Bahn darstellen, die an den Seitenrändern mehr oder weniger gerade, hochgezogen oder abfallend ist, je nach der den Rändern (28) und (29) der seitlichen Teile (4) und (5) verliehenen veränderlichen Form, und aus drei miteinander verbundenen Abschnitten besteht, die jeweils im wesentlichen einem Teil einer Ellipse entsprechen, einem zentralen (58), dessen unterer Punkt (57) mit dem Wert Null für durchschnittliche Pflügverhältnisse im wesentlichen auf halber Höhe des Streichblechs in der vertikalen Symmetrieebene AA' liegt, wobei die beiden anderen (59), jeweils einer an jedem Seitenrand des vorgenannten (58), zu den Seitenrändern (4) und (5) führen.
